(19) **Europäisches Patentamt / European Patent Office / Office européen des brevets**

(11) **EP 4 776 561 A2**

(12) **EUROPEAN PATENT APPLICATION**

(43) Date of publication:
**15.07.2026 Bulletin 2026/29**

(21) Application number: **26181318.2**

(22) Date of filing: **26.08.2021**

(51) International Patent Classification (IPC):
**H04L 9/00** $^{(2022.01)}$

(52) Cooperative Patent Classification (CPC):
**G06Q 20/065; G06Q 20/3678; G06Q 20/401;
H04L 9/3236; H04L 9/3247; H04L 9/50;**
H04L 2209/56

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2020 GB 202014838**

(62) Document number(s) of the earlier application(s) in
accordance with Art. 76 EPC:
**21766476.2 / 4 182 868**

(71) Applicant: **nChain Licensing AG**
**6300 Zug (CH)**

(72) Inventors:
• **ZHANG, Wei**
**London, W1W 8AP (GB)**
• **WRIGHT, Craig Steven**
**London, W1W 8AP (GB)**

(74) Representative: **Page White Farrer**
**Bedford House**
**21a John Street**
**London WC1N 2BF (GB)**

Remarks:
This application was filed on 27-05-2026 as a
divisional application to the application mentioned
under INID code 62.

(54) **COMMENSAL TOKEN SYSTEM**

(57) A computer-implemented method of validating token transactions, wherein the validating entity has access to a token mint transaction and/or a token setup transaction, wherein the token mint transaction comprises cryptographic minting data, and mints an initial amount of the tokens, wherein the token setup transaction comprises the minting data certified by the token issuer, and wherein the method is performed by a validating entity and comprises: obtaining a target token transaction comprising one or more token inputs and one or more token outputs; and validating the target token transaction, wherein said validating of the target token transaction comprises: verifying that each token input of the target token transaction comprises the minting data, and/or verifying that each token input of the target token transaction references a respective token output of either the token mint transaction or a previously validated token transaction that can be traced back to the token mint transaction.

Figure 7

**Description**

TECHNICAL FIELD

The present disclosure relates to a method of validating token transactions. A token transaction is a blockchain transaction that comprises one or more token outputs.

BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in more detail later. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

SUMMARY

Using the blockchain to issue and spend tokens in of and itself not novel. Previously tokens have been issued by making use of unspendable transaction outputs. To implement the system, a special token engine needs to be built to interpret the data payload in the unspendable output, and the data itself has no meaning to the blockchain system. In terms of storage, it presents a challenge to blockchain nodes as they may be required to separate the data from the spendable outputs.

An alternative is a UTXO-based approach, where tokens are coupled to transaction outpoints. Being more aligned with the native blockchain system, UTXO-based token systems share some advantageous features of the blockchain system in addition to the security such as in-script smart contracts for tokens. It also allows token issuers to peg their token value to the native blockchain token value.

It would be desirable to implement a token system on the blockchain, whereby tokens can be validated quickly and efficiently (e.g. without the need for a purpose built token engine to interpret token data), and without negatively impacting the storage of the blockchain by blockchain nodes (e.g. without bloating the blockchain with token payload data).

According to one aspect disclosed herein, there is provided a computer-implemented method of validating token transactions, wherein a token transaction is a blockchain transaction that comprises one or more token outputs, each token output locking a respective amount of tokens, wherein the validating entity has access to a token mint transaction and/or a token setup transaction, wherein the token mint transaction comprises cryptographic minting data, and mints an initial amount of the tokens, wherein the token setup transaction comprises the minting data certified by the token issuer, and wherein the method is performed by a validating entity and comprises: obtaining a target token transaction comprising one or more token inputs and one or more token outputs; and validating the target token transaction, wherein said validating of the target token transaction comprises: verifying that each token input of the target token transaction comprises the minting data, and/or verifying that each token input of the target token transaction references a respective token output of either the token mint transaction or a previously validated token transaction that can be traced back to the token mint transaction.

It is understood that the blockchain can be considered as a directed acyclic graph (DAG) that comprises multiple transaction chains. Each transaction chain starts with a coinbase transaction or multiple of them. Two or more transaction chains can be merged by having a transaction with multiple inputs from different transaction chains. There are many features that can developed using this interpretation of the blockchain. Embodiments of the present invention enable the development of a token system, referred to herein as a "commensal token system".

Commensalism is a symbiotic relation between two species where members of one species gain benefits while those of the other species neither benefit nor are harmed. The commensal token system of the present invention benefits from the blockchain system for its double spending prevention, data integrity and other security features, while the blockchain system is not affected by the token system. This is achieved by pegging the token value to the native blockchain token value.

A token transaction is a blockchain transaction that comprises one or more "token outputs". A token output is a spendable output of a blockchain transaction that locks a respective amount of tokens. In other words, the value of the token is pegged to the native blockchain token (e.g. bitcoin). Therefore there is no extra token specific work or token data for blockchain nodes to handle. Furthermore, because of the pegging, the security of the blockchain system is naturally inherited by the token system. That is, the token system benefits from the blockchain system without creating any extra burden on the Bitcoin system. Since each token transaction will be validated by the blockchain nodes according to the blockchain protocol, in order for a validating entity to validate a token transaction, the validating entity need only verify that the token transaction being validated (referred to herein as the target token transaction) contains a token input that can be traced back to a token mint transaction. That is, the token input either references a token output of the token mint transaction, or the token input references a token output of a previous token transaction that is part of a transaction train leading back to the token mint transaction. This improves the efficiency of validating token transactions.

In some embodiments, the validating entity may construct a data structure to further improve the efficiency of validating token transactions. For instance, the validating entity may construct token blocks, which are analogous to blockchain blocks. Each token block contains a set of valid token transactions (or respective transaction identifiers of a set of valid token transactions). Instead of tracing back all the way to the token mint transaction, the validating entity need only check that the token input references a valid token transaction stored in a token block.

According to another aspect disclosed herein, there is provided a computer-implemented method of validating token transactions, wherein a token transaction is a blockchain transaction that comprises one or more token outputs, each token output locking a respective amount of tokens, and wherein the method is performed by a validating entity and comprises: obtaining a target token transaction comprising one or more token inputs and one or more token outputs; and validating the target token transaction, wherein validating the target token transaction comprises verifying that each token input of the target token transaction references a respective token output stored in a current token snapshot, wherein the current token snapshot comprises a set of token unspent transaction outputs (UTXOs), wherein each token UTXO is a token output of a respective token transaction that has not been spent.

BRIEF DESCRIPTION OF THE DRAWINGS

To assist understanding of embodiments of the present disclosure and to show how such embodiments may be put into effect, reference is made, by way of example only, to the accompanying drawings in which:

Figure 1 is a schematic block diagram of a system for implementing a blockchain,

Figure 2 schematically illustrates some examples of transactions which may be recorded in a blockchain,

Figure 3A is a schematic block diagram of a client application,

Figure 3B is a schematic mock-up of an example user interface that may be presented by the client application of Figure 3A,

Figure 4A schematically illustrates the blockchain ledger as a directed acyclic graph partitioned by two transaction chains,

Figure 4B schematically illustrates the blockchain ledger as a blockchain where each block contains a new coinbase transaction,

Figure 5 schematically illustrates an example of an outpoint-signature directed acyclic graph,

Figure 6 schematically illustrates an example of a token network that connects to the blockchain network, and

Figure 7 schematically illustrates an example system for implementing embodiments of the present invention.

DETAILED DESCRIPTION OF EMBODIMENTS

EXAMPLE SYSTEM OVERVIEW

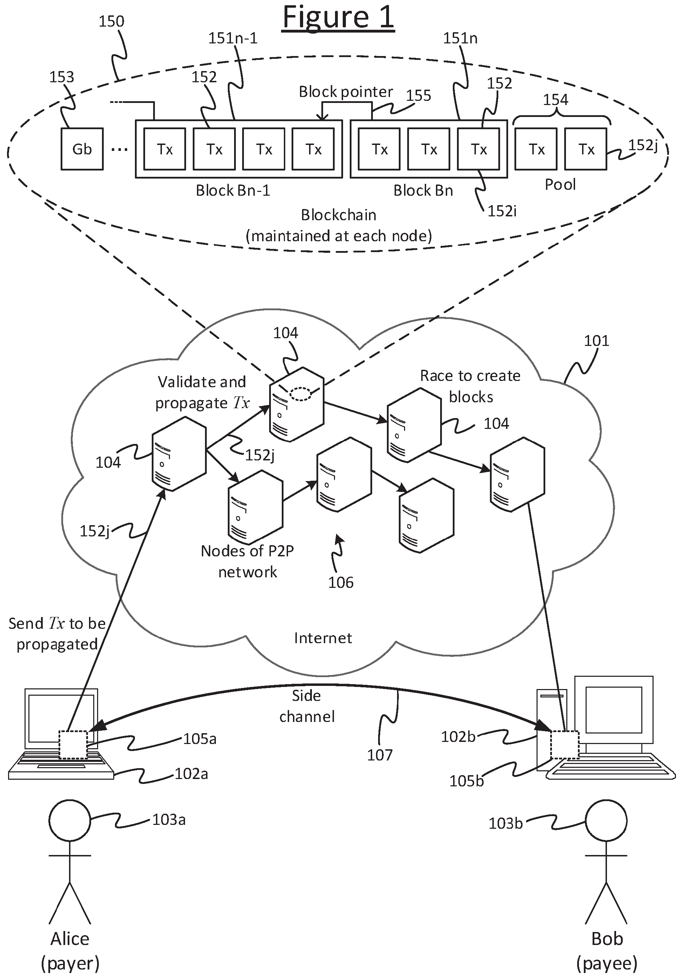

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.
Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.
The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when a party 103, such as an individual user or an organization, wishes to enact a new transaction 152j (either manually or by an automated process employed by the party), then the enacting party sends the new transaction from its computer terminal 102 to a recipient. The enacting party or the recipient will eventually send this transaction to one or more of the blockchain nodes 104 of the network 106 (which nowadays are typically servers or data centres, but could in principle be other user terminals). It is also not excluded that the party 103 enacting the new transaction 152j could send the transaction directly to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the party 103 included in the input of the new transaction 152j matches a condition defined in the output of the preceding transaction 152i which the new transaction assigns, wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned (e.g. spent) is whether it has yet been validly redeemed by the input of another, onward transaction 152j according to the blockchain node protocol. Another condition for a transaction to be valid is that the output of the preceding transaction 152i which it attempts to redeem has not already been redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered pool 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered pool of pending transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. The significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the pool of yet-to-be published transactions 154 at any given time, depending on when they started searching for a solution or the order in which the transactions were received. Whoever solves their respective puzzle first defines which transactions 152 are included in the next new block 151n and in which order, and the current pool 154 of unpublished transactions is updated. The blockchain nodes 104 then continue to race to create a block from the newly-defined ordered pool of unpublished transactions 154, and so forth. A protocol also exists for resolving any "fork" that may arise, which is where two blockchain nodes104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to newly assign an additional, accepted amount of the digital asset in a new special kind of transaction which distributes an additional defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction" or "generation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106.

The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered pool of pending transactions 154 maintained at a given blockchain node 104, that blockchain node 104 will start competing to solve the proof-of-work puzzle on the latest version of their respective pool of 154 including the new transaction 152 (recall that other blockchain nodes 104 may be trying to solve the puzzle based on a different pool of transactions 154, but whoever gets there first will define the set of transactions that are included in the latest block 151. Eventually a blockchain node 104 will solve the puzzle for a part of the ordered pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly.

In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

UTXO-BASED MODEL

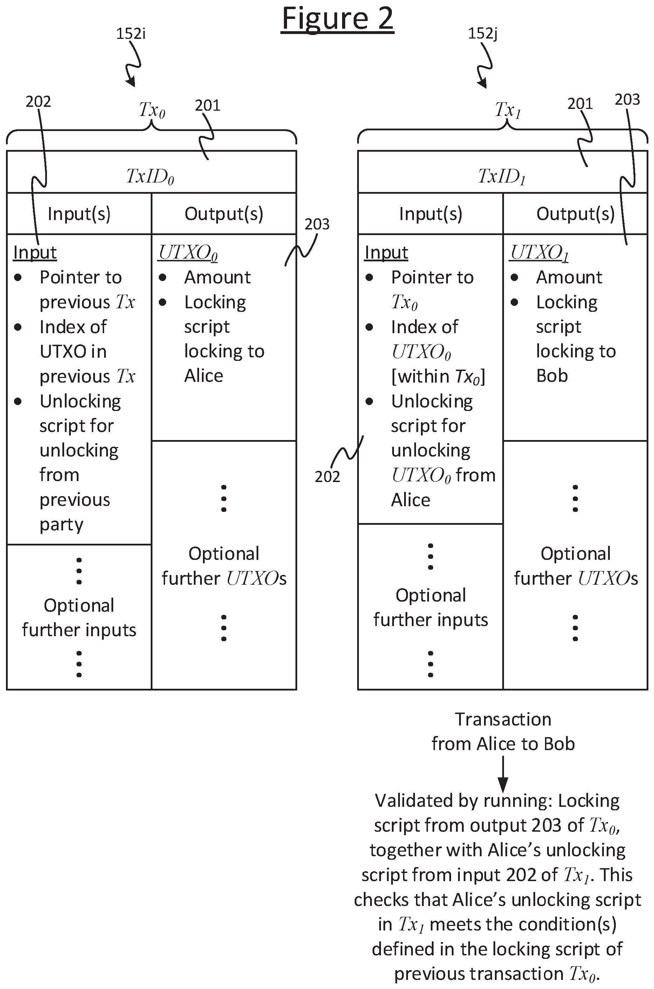

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled "$Tx_0$" in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1$, or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ comprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ comprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains a representation (i.e. a hash) of the public key $P_A$ from a public-private key pair of Alice. The input 202 of $Tx_1$ comprises a pointer pointing back to $Tx_1$ (e.g. by means of its transaction ID, $TxID_0$, which in embodiments is the hash of the whole transaction $Tx_0$). The input 202 of $Tx_1$ comprises an index identifying $UTXO_0$ within $Tx_0$, to identify it amongst any other possible outputs of $Tx_0$. The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts:

<Sig $P_A$> <$P_A$> ‖ [Checksig $P_A$]

where "‖" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the unlocking script in the input of $Tx_1$ contains the signature of Alice signing the expected portion of data. The expected portion of data itself (the "message") also needs to be included in order to perform this authentication. In embodiments the signed data comprises the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid. This means that the blockchain node 104 will add $Tx_1$ to the ordered pool of pending transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node 104 that successfully includes her transaction 104 in a block 151. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference may be assigned by the node 104 that wins the proof-of-work race to create the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

SIDE CHANNEL

As shown in Figure 1, the client application on each of Alice and Bob's computer equipment 102a, 120b, respectively, may comprise additional communication functionality. This additional functionality enables Alice 103a to establish a separate side channel 107 with Bob 103b (at the instigation of either party or a third party). The side channel 107 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 107 may be used to exchange any other transaction related data, such as keys, negotiated amounts or terms, data content, etc.

The side channel 107 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 107 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 107. Note therefore that if it is said that Alice and Bob exchange certain pieces of information or data, or such like, over the side channel 107, then this does not necessarily imply all these pieces of data have to be send over exactly the same link or even the same type of network.

CLIENT SOFTWARE

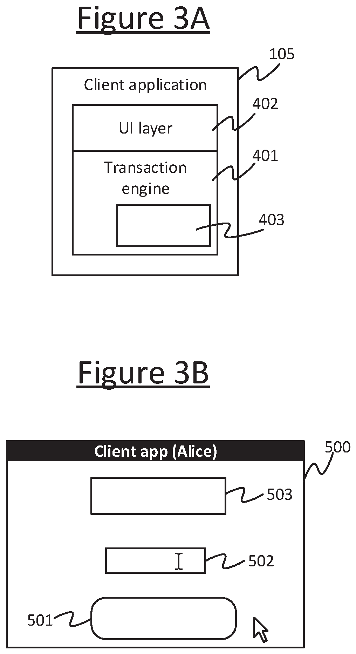

Figure 3A illustrates an example implementation of the client application 105 for implementing embodiments of the presently disclosed scheme. The client application 105 comprises a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the schemes discussed above and as discussed in further detail shortly. In accordance with embodiments disclosed herein, the transaction engine 401 of each client 105 may comprise a function 403 configured to generate token transactions.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could comprise one or more display screens (touch or non-touch screen) for providing a visual output, one or more speakers for providing an audio output, and/or one or more haptic output devices for providing a tactile output, etc. The user input means could comprise for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note: whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may comprise one or more UI elements 501, 502, 502 rendered as distinct UI elements via the user output means.

For example, the UI elements may comprise one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands).

Alternatively or additionally, the UI elements may comprise one or more data entry fields 502. These data entry fields are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may comprise one or more information elements 503 output to output information to the user. E.g. this/these could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3 is only a schematized mock-up and in practice it may comprise one or more further UI elements, which for conciseness are not illustrated.

BLOCKCHAIN AS DIRECTED ACYCLIC GRAPH

The Bitcoin ledger is widely referred to as a blockchain where the data structure is considered as a chain of blocks. However, if we take transactions as the basic elements (instead of blocks), we can see the Bitcoin ledger can be considered as a directed acyclic graph. This section provides a formal definition of Bitcoin directed acyclic graph (BDAG) and a special type of subgraphs of BDAG.

*Definition - Bitcoin Directed Acyclic Graph*

A Bitcoin directed acyclic graph (BDAG) is a DAG where

1. nodes are Bitcoin transactions, and
2. a directed edge is established from one node to another if at least one output is assigned (spent) from the first node to the second node.

Note that the graph is acyclic because a directed cycle of transactions would imply a circular reference of transaction IDs in their inputs, which is impossible.

Based on the definition, we can highlight a few properties.

1. each node can have at most n outward edges where n is the number of spendable outputs in the transaction represented by this node,
2. a coinbase node has no inward edges, and
3. starting at any node and following the opposite direction of the edges, the path should be ended at one or more coinbase nodes.

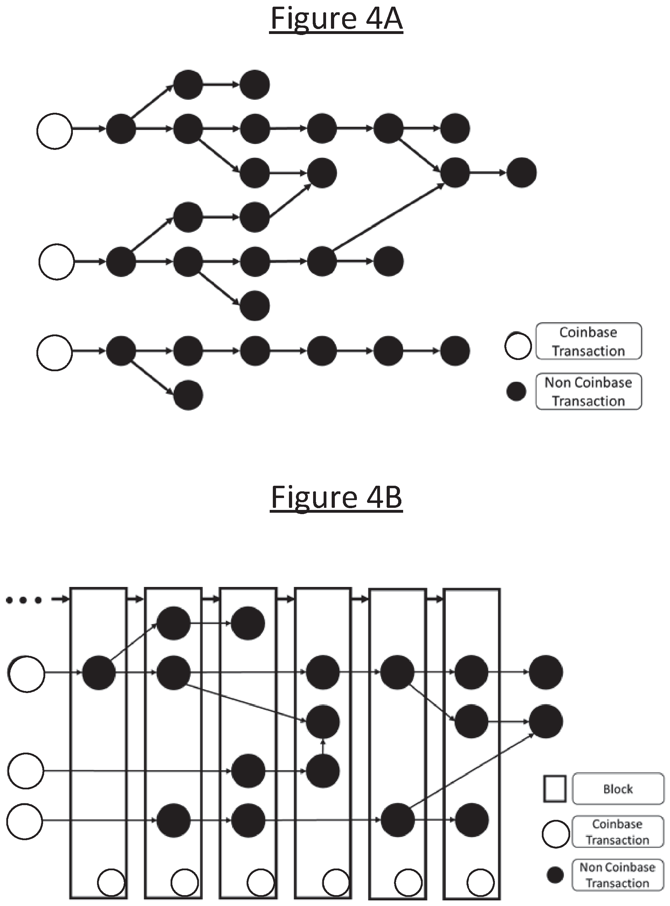

An example of a BDAG is given in Figure 4A. Figure 4B shows the BDAG when the blockchain structure is stamped to the BDAG.

*Definition - Transaction Path*

A transaction path from node $A$ to node $B$ in a BDAG is a set of nodes $N_0, N_1, \ldots, N_t$, where

1. $N_0$ is node A and $N_t$ is node $B$,
2. there is a directed edge from $N_i$ to $N_{i+1}$ for all $i = 0, 1, \ldots, t - 1$, and
3. t is defined to be the length of the path.

*Definition - Transaction Chain*

A transaction chain is a subgraph of a BDAG that is connected. That is, for any pair of nodes in the subgraph, there is a path between the two nodes ignoring the directions of the edges. Note that all transaction chains in BDAG form a partition of BDAG.

As in Figure 4A, we have two transaction chains. The first one starts with two coinbase transactions and it can be considered as a merge of two transaction chains, while the second one starts with one coinbase transaction and has a much simpler structure.

Note that whilst the above example refers to the Bitcoin ledger (i.e. the Bitcoin blockchain), the same definition applies to other UTXO-style blockchains.

VALIDATING TOKENS

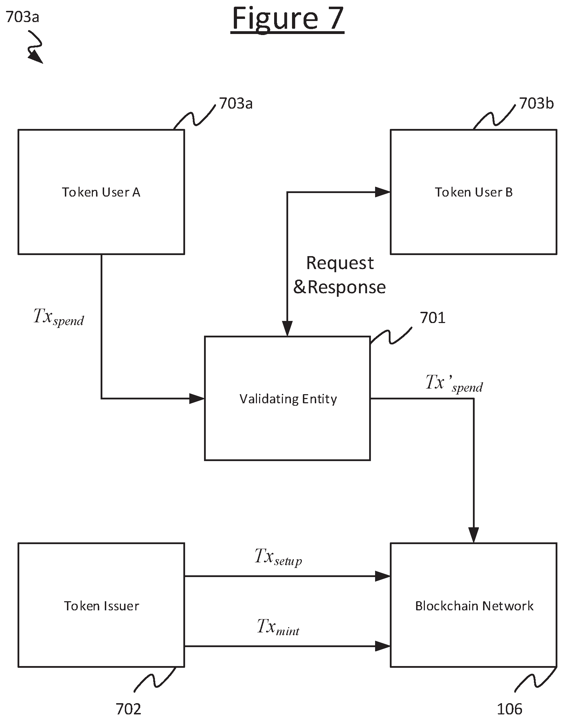

Embodiments of the present invention relate to validating token transactions. Figure 7 illustrates an example system 700 according to some embodiments. As shown, the system 700 comprises a validating entity 701, a token issuer 702, one or more token users 703a, 703b and the blockchain network 106. Note that whilst only two token users 703a ,703b are shown in Figure 7, in general the system 700 may comprise any number of token users 703. Each of the token issuer 702 and the one or more token users 703 may take the form of Alice 103a or Bob 103b as described with reference to Figures 1 to 3. That is, each of the token issuer 702 and the token users 703 may be configured to perform some or all of the operations performed by Alice 103a and/or Bob 103b.

The validating entity 701 may take one of several forms, the details of which will be discussed below. However in general the validating entity 701 may operate computer equipment comprising a processing apparatus comprising one or more processors, e.g. one or more CPUs, GPUs, other accelerator processors, application specific processors, and/or FPGAs. The computer equipment further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment stores software may comprise a respective instance of at least one client application arranged to run on the processing apparatus. It will be understood that any action attributed herein to the validating entity 701 may be performed using the software run on the processing apparatus of the computer equipment. The computer equipment of the validating entity 701 may comprise at least one user terminal, e.g. a desktop or laptop computer, a tablet, a smartphone, or a wearable device such as a smartwatch. The computer equipment of the validating entity 701 may also comprise one or more other networked resources, such as cloud computing resources accessed via the user terminal. The client application may be initially provided to the computer equipment of the validating entity 701 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The validating entity 701 is configured to validate token transaction. The validating entity 701 has access to a mint transaction. A mint transaction mints, i.e. issues, an amount of tokens. The mint transaction may be signed by the token issuer 702 (i.e. the mint transaction may include an input comprising a signature linked to an issuing public key owned by the token issuer 702) and comprises an output that locks an initial amount of tokens. In other examples, the mint transaction may include a different form of cryptographic data, e.g. a minting public key, a message signed by the token issuer, a message encrypted by the token issuer, etc. In general, the mint transaction includes cryptographic "minting" data. Cryptographic data is data that is used as part of a cryptographic scheme. The minting data is public information known to be associated with the minting of tokens. The mint transaction may include more than one output that locks a respective initial amount of tokens. The mint transaction is recorded on the blockchain 150. The validating entity 701 may access the mint transaction from the blockchain 150, or the validating entity 701 may store the mint transaction locally. In some examples the minting data may be a knowledge proof, e.g. a hash puzzle or r-puzzle. The knowledge proof requires knowledge of data in order to be solved, i.e. unlocked.

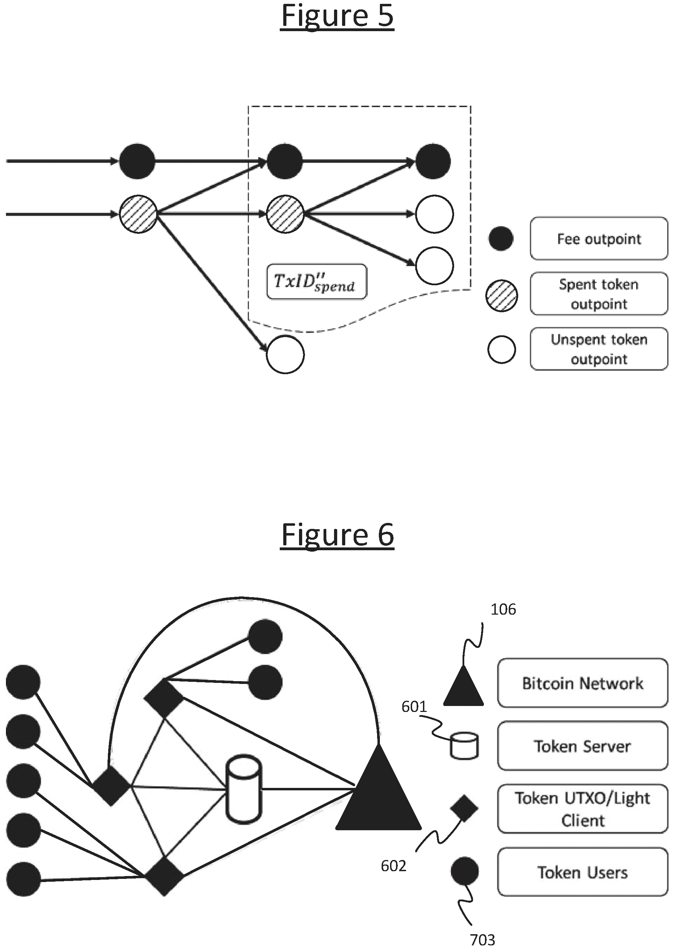

The validating entity 701 obtains a "target token transaction", i.e. a token transaction that is to be validated by the validating entity 701. The target token transaction may be submitted to the validating entity 701 by a token user 703. Or, the target token transaction may be submitted to the validating entity by a different validating entity 701. That is, the system 700 may comprise multiple validating entities, e.g. the token server 601 and the token client of Figure 6. The target transaction may be obtained in some other way.

A first condition for the target token transaction to be a valid token transaction is that the target token transaction must be part of a transaction chain leading back to the mint transaction. That is, the target transaction must include an input that either references (i.e. spends) an output of the mint transaction, or that references a previous token transaction that is part of the transaction chain leading back to the mint transaction. In the latter case, the previous transaction must include an input that either references an output of the mint transaction, or that references a previous token transaction that is part of the transaction chain leading back to the mint transaction. In other words, tracing the referenced outputs of the previous token transactions must eventually lead to the token transaction. If the target token transaction is a mint transaction, the first condition is met if the target token transaction comprises the minting data, e.g. the minting public key.

The validating entity 701 may be configured to verify the first condition by performing said tracing of the referenced outputs. Or, the validating entity 701 may perform a more efficient process to verify the first condition, as discussed below.

The target token transaction may contain more than one token input. In those examples, the validating entity 701 is configured to verify that each token input is part of a transaction chain leading back to a mint transaction. Note that there may be more than one mint transaction issued by the token issuer 702. In that case, a given token input may trace back to more than one mint transaction. Similarly, different token inputs of the target token transaction may trace back to different mint transactions.

In some examples, additional conditions must be met for the target token transaction to be deemed valid. These additional conditions will be described below.

Once validated, i.e. once the first condition any other optional conditions have been verified, the validating entity 701 may submit the target token transaction to the blockchain network 106. That is, a token user 703a may submit the target token transaction to the validating entity for validation, and on condition that the target token transaction is valid, the validating entity 701 forwards the target token transaction to the blockchain network 106.

The validating entity 701 may obtain confirmation that the target token transaction is a valid blockchain transaction. For instance, the validating entity 701 may obtain confirmation that the target token transaction has been published in a block 151 on the blockchain 150. The validating entity 701 may obtain a Merkle proof from a blockchain node 104 for verifying that the target token transaction has been published in the block 151. Once satisfied that the target token transaction is a valid blockchain transaction, the validating entity 701 may record the target token transaction in a list of valid token transactions. Note that the validating entity 701 may record the target token transaction in the list of valid token transactions before obtaining confirmation that the target token transaction is a valid blockchain transaction. The validating entity 701 may choose to delete the target token transaction from the list in the even that the target token transaction is not a valid blockchain transaction.

In some examples, having validated the target token transaction, the validating entity 701 may sign the target token transaction before submitting it to the blockchain network 106. For instance, the target token transaction may be incomplete, and the validating entity 701 may complete the target token transaction by including an input comprising the validating entity's signature, i.e. a signature linked to a public key owned by the validating entity 701. This signature signifies that the target token transaction has been validated. In some examples, the input may be a fee payment input, i.e. an input that pays the transaction fee collected by the blockchain node 104 that publishes the transaction in a block 151. Such an input is an example of a "non-token input".

The target token transaction may include one or more non-token inputs, e.g. before the validating entity 701 adds a non-token input if required. The validating entity 701 does not need to check that the non-token inputs satisfy the first condition of being part of a transaction chain leading back to a mint transaction. However the validating entity 701 does need to distinguish between token inputs and non-token inputs in order to determine which inputs must satisfy the first condition. In the simplest example, the inputs may be distinguished based on their index in the target transaction. E.g. the first input may be defined as being a token input and the second input may be defined as being a non-token input, or vice versa.

In other examples, non-token inputs may be identified by identifying the public key included in the non-token input. That is, the validating entity 701 may determine whether an input comprises one of a predefined set of public keys, e.g. one of a set of fee-payment public keys. If the input does contain one of the predefined set of public keys, the validating entity 701 considers that input to be a non-token input.

As another option, the validating entity 701 may identify non-token inputs as those that are signed with a particular signature flag. For instance, non-token inputs may be defined as those signed with a SIGHASH_SINGLE signature flag.

If the target token transaction does comprise one or more non-token inputs, the target token transaction must satisfy a second condition in order to be deemed as a valid token transaction. The validating entity 701 is configured to verify that the total amount of tokens locked by the token output(s) of the target token transaction is not greater than the total amount of tokens locked by the outputs that are referenced by the token inputs of the target token transaction. In other words, the target token transaction cannot distribute more tokens across its token outputs than those spent by the token inputs of the target token transaction.

The target token transaction may comprise one or more non-token outputs. For instance, the non-token output may be used to return the difference between the fee payment input and the transaction fee to the entity that pays the transaction fee. Non-token outputs may serve other purposes. If the target token transaction does comprise one or more non-token outputs, the target token transaction must satisfy a third condition in order to be deemed as a valid token transaction. The validating entity 701 is configured to verify that the total amount of tokens locked by the token output(s) of the target token transaction is not greater than the total amount of tokens locked by the outputs that are referenced by the token inputs of the target token transaction.

In order to verify the third condition, the validating entity 701 needs to distinguish between token outputs and non-token outputs. In the simplest case, the index of the output may be enough to distinguish between token outputs and non-token outputs, e.g. non-token outputs are positioned first in the transaction. As another option, non-token outputs may be identified as those having the same index as a corresponding non-token input. Or, in the case that non-token inputs are defined to be those signed with a particular signature flag, non-token outputs as those having been signed with more signatures that the token outputs.

As another optional condition, the validating entity 401 may verify that the target token transaction does not attempt to double-spend an output of blockchain transaction. That is, the validating entity may verify that that the outputs referenced by the inputs (both non-token outputs and token outputs) of the target token transaction are unspent transaction outputs (UTXOs). This check will be performed by the blockchain nodes 104 when submitted to the blockchain network 106, but the validating entity 701 may want to also perform this check, e.g. to prevent sending invalid blockchain transactions to the blockchain network 106.

In some examples, the validating entity 701 may also validate the mint transaction. For instance, the validating entity 701 may verify that the mint transaction comprises a signature linked to a minting public key associated with the token issuer 702.

The validating entity 701 may receive a request from a requesting entity (e.g. a token user 703b) to confirm whether a token transaction (e.g. the target token transaction) is a valid token transaction. The validating entity 701 may verify that the token transaction is a valid token transaction and, if the token transaction is valid, submit a response to the requesting entity informing the requesting entity is a valid token transaction. This request and response process will be discussed more below.

## Token Server

In some embodiments, the validating entity 701 may comprise a "token server" 601. That is, the validating entity 701 may take the form of (or include) a server configured to perform the actions of the validating entity 701. The token server 601 may store a record (e.g. a database) of valid token transactions, i.e. token transactions that have been previously validated. These token transactions may have been validated by the token server 601, or by a different entity. In some examples, the token server 601 may store a record of all valid transactions.

In these embodiments, the token server 601 may verify that a token input of the target token transaction references an output of a previously validated token transaction by determining whether the referenced transaction is present in the record of valid token transactions, e.g. by performing a look-up of the transaction ID of the referenced transaction.

In some examples, the token server 601 may construct "token blocks". Token blocks share some similarities with blockchain blocks 151. The token blocks comprise a token block header and a list of valid token transactions (or at least respective identifiers of valid token transactions). The target token transaction, once validated, may be included in a current (i.e. latest) token block. The token block header of a given token block comprises a Merkle root calculated based on the set of token transactions in that token block. The block header may comprise additional fields, as discussed below.

Similarly to blockchain blocks 151, the block header of a token block may comprise a pointer to a previous token block in the sequence (i.e. chain) of token blocks. The pointer may take the form of a hash (e.g. double hash) of the block header of the previous token block. The pointers trace back to the first (i.e. first to be created) token block.

The token server 601 may construct one token block per blockchain block 151. That is, a token block may be constructed based on the transactions (and specifically the token transactions) within a given token block. The token block may be constructed prior to a corresponding blockchain block 151 being published (e.g. if the token transactions that will be included in the blockchain block 151 have been sent to the network 106 by the token server 601), or after the blockchain block 151 has been published (e.g. the token server 601 may scan the blockchain block 151 for token transactions).

Optionally, some or all of the token blocks may comprise one or more signatures. The signatures may be included in the respective block header of a token block. For instance, the token server 601 may include a signature to acknowledge that the token block was indeed constructed by the token server 601. The signed message may comprise some or all of the token block. In some examples, the token issuer 703 and/or one or more additional entities (e.g. an auditor, a government body or other official entity) may include respective signatures.

As well as keeping a record of the token blocks, the token server 601 may transmit (e.g. periodically or upon request) one or more token blocks to a requesting entity, e.g. a token user 703b or token issuer 702. The requesting entity may be the token issuer 702, a token user 703 or a different validating entity (e.g. the token light client described below). The token server 601 may transmit the full token block, or just the token block header.

In some cases, the token server 601 may transmit the token block header (and optionally the full token block) as part of a simplified token verification method to verify the existence and integrity of a valid token transaction. Verifying the integrity of a transaction ensures that the data in the transaction has not been tampered with. For instance, a requesting entity (e.g. token user 702b) may wish to verify that a token transaction is valid. The token transaction under question may be a token transaction that is referenced by an input of a current token transaction, e.g. the target token transaction. To confirm that the referenced token transaction is valid, the token server 601 may provide the requesting entity with a Merkle proof for verifying the existence of the referenced token transaction in a token block. Merkle proofs are known to the skilled person. The Merkle proof transmitted to the requesting entity contains a sequence of hashes. The referenced token transaction is hashed, then concatenated with a first hash in the sequence, the result of which is then hashed. That next result is then concatenated with a next one of the hashes in the sequence (if present), the result of which is then hashed. Each hash in the sequence has a left or right indicator. The leftness or rightness can be determined by a single index which can be provided as the first number in the Merkle proof. This process is repeated until each hash in the sequence has been used. If the final hash is equal to the Merkle root included in the token block header of a token block, then the referenced token transaction is included in the token block. Since only valid token transactions are included in the token block, the referenced token transaction must be valid and the data in the referenced transaction must have not been modified.

**Token Light Client**

In some embodiments, the validating entity 701 may comprise a "token light client" 602a. That is, the validating entity 701 may take the form of (or include) a client application configured to perform the actions of the validating entity 701. The token server 601 may store a record (e.g. a database) of valid token transactions, i.e. token transactions that have been previously validated. These token transactions may have been validated by the token light client 602a, or by a different entity.

The token light client 602a maintains a record of token block headers, along with a record of transaction identifiers of valid token transactions. The token light client 602a also stores a record of the token value and index of each token output of the valid token transactions. For instance, the record may comprise a plurality of data items of the form *TxID∥index∥value.* The token block headers may be obtained from the token server 601, e.g. upon request and/or upon each token block being constructed by the token server 601. In some examples, the token block headers may be of token blocks constructed by the token light client 602a.

The token light client 602a may validate received token transactions using the record. For instance, the token light client 602a may verify that a token output referenced by a token input of the target transaction is stored in the record. E.g. the token light client 602a performs a look up of the referenced *TxID∥index∥value* in the record. If the target token transaction is valid (i.e. satisfies the one or more conditions for validity), the token light client 602a may add the token output(s) of the target transaction in the record. In some examples, the token light client 602a may remove the referenced token outputs from the record.

The token light client 602a may receive token transactions from token users 703, validate the token transactions, and then submit them to the blockchain network 106 and/or to the token server 601.

Like the token server 601, the token light client 602a may also construct token blocks. These token blocks may take the same form as those constructed by the token server 601. For instance, the token light client 602a may receive token transactions from token users 703 and construct a token block based on those token transactions. The token light client 602a may also include in a token block token transactions which have been sent to different instance of the token light client 602a, and which are then forwarded to the token light client 602a or obtained from the blockchain 150 (after being submitted to the blockchain network 106 by the other token light client). Like the token server 601, the token light client 602a may construct a token block for each newly published block of the blockchain 150.

In some examples, the token light client 602a may send the token blocks which it constructs to the token server 601, e.g. to be verified by the token server 601. The token server 601 may add its signature to the token block header of such token blocks, and return them to the token light client 602a. In some examples, the token light client 602a may receive token blocks from the token server 601. For instance, the token light client 602a may temporarily lose its connection to the blockchain network 106 and therefore be unable to construct token blocks during that time.

Like the token server 601, in some cases the token light client 602a may transmit a token block header (and optionally the full token block) as part of a simplified token verification method to verify the existence of a valid token transaction. A similar scenario applies, where the token light client 602a sends to a requesting entity (e.g. token user 703) a block header and a Merkle proof for a valid token transaction included in the corresponding token block. If the Merkle proof leads to the Merkle root included in the block header, the token transaction can be confirmed as being included in the token block, and as such, is a valid token transaction.

**Token UTXO Client**

As shown in Figure 6, the system may comprise one or more token UTXO clients 602b. These client applications are also configured to validate token transactions. That is, the validating entity 701 may take the form of a token UTXO client application 602b. The token UTXO client keeps a record of one token snapshots. A token snapshot comprises a set of token UTXOs. Each token UTXO is an unspent token output of a token transaction. Each token snapshot captures the set of token UTXOs at a different point in time.

Some or all of the token snapshots are constructed by the token UTXO client 602b. Some may be received from a different instance of the token UTXO client 602b or received from the token server 601. In some instances, the token server 601 may construct a token snapshot and send it to the token UTXO client 602b, e.g. in response to the token UTXO client 602b losing a connection to the blockchain network 106. A token snapshot may be constructed by tracking the token UTXOs on the blockchain, i.e. tracking which token outputs are yet to be validly spent by a later blockchain transaction (token or non-token).

The token UTXO client 602b is configured to validate token transactions, e.g. the target token transaction, by verifying that each token input of the target token transaction references a respective unspent token output of a previous token transaction (which may be the mint transaction). The token UTXO client 602b does this by verifying that the referenced token output is present in the latest token snapshot.

Upon validating the token transaction, the token UTXO client 602b may transmit the token transaction to the blockchain network 106 and/or to the token server 601. The token UTXO client 602b may construct a new token snapshot which includes the token output(s) of the target transaction but does not include the referenced token outputs.

The token UTXO client 602b may also perform a simplified token verification method to verify the existence of a valid token output. Each token UTXO snapshot may comprise a Merkle root calculated based on the token UTXOs stored in the snapshot. To verify the existence of a token output, the token UTXO client 602b may transmit to a requesting entity (e.g. a token user 703) a Merkle path linking a given token UTXO to the Merkle root of the current token snapshot. Note that the Merkle root may be constructed for a Merkle tree whose leaves take one of the following forms:

1. *TxID‖index*
2. *TxID‖index‖value*
3. *TxID‖index‖locking script‖value*

EXAMPLE TOKEN SYSTEM

An example token system will now be described. It will be appreciated that some features of the token framework are optional and other variations may be selected based on the particular implementation of embodiments of the invention. According to one example framework, there is a dust limit imposed on blockchain transactions, the value of the token is pegged to the native blockchain token, and there is no token-specific data is pushed to locking scripts.

**Setup transaction**

The token issuer 702 may publish a setup transaction. Suppose the token issuer 702 would like to issue tokens that represent a national currency. Note that this is just one of many possible use cases of the token system. The token issuer 702 can choose to publish the specification of her tokens on-chain in an unspendable (e.g. OP_FALSE OP_RETURN) payload in a setup transaction. Alternatively, the specification may be published on a website or any other appropriate public record as long as the record is trusted by the users and the public in general. This will allow the token issuer 702 to open the token chain to the public and allow them to attest the rules of her tokens. Whenever there is a dispute, the token users 703, including the token issuer 702, can refer to the specification to settle the dispute. One can think of the specification as the article of a public company or the terms and conditions for the token system. The specification can reference ERC-20 standards, Tokenised standards, or any customised standards which the token issuer feel appropriate. If the token chain is private, then the specification can be published in its hash value to ensure its integrity.

An example of a setup transaction is given below:

| $TxID_{setup}$ | | | |
|---|---|---|---|
| Version | 1 | Locktime | 0 |
| In-count | 1 | Out-count | 2 |
| Input list | | Output list | |
| Outpoint | Unlocking script | Value | Locking script |
| Alice's outpoint 0 | < $Sig_{issue}$ > < $PK_{issue}$ > | $x_0$ satoshi | OP_DUP OP_HASH160 <$H(PK_0)$> OP_EQUALVERIFY OP_CHECKSIG |
| | | 0 | OP_FALSE OP_RETURN <Specification> |

where <Specification> can be

| Token | Great Blockland Pound (GBP) |
|---|---|
| Public key for minting | $PK_{mint}$ |
| Public key for melting | $PK_{melt}$ |
| Pegging ratio (token:satoshi) | 1: 1000 |
| Reserve: Issuance | 1: 1 |
| Contact detail | Alice@ctsforgbp.com |
| Jurisdiction | Great Blockland |
| Issuance Licence | Central Bank of Great Blockland |
| Third Party Audit | Auditing Company ($PK_{Audit}$) |
| Auditing Dates | 1st Thursday in every month |
| Token Validation | GBP Token Guide.pdf |
| Extra Information | GBP for everyone |

The token issuer 702 signs the setup transaction with a signature and includes an issue public key. The setup transaction may reference any unspent transaction output (UTXO) owned by the token issuer 702. Similarly, the output of the setup transaction may be locked to any arbitrary public key, e.g. a different public key owned by the token issuer 702.

Note that the specification given above is for illustration purpose only. The token issuer 702 can include all the details about the token system in this setup transaction. Generally, the specification is intended to demonstrate that the token system is technically robust and legally compliant.

Three public keys are explicitly shown in the example specification. $PK_{mint}$ is used to mint tokens, $PK_{melt}$ is used to melt coins, and $PK_{Audit}$ is used to attest the compliance of the token system. All three public keys are certified by the signature from the token issuer 702 in the input of the setup transaction. Other types of minting data may be included in the specification instead of or as well as the public keys.

The token issuer 702 can add more public keys to provide more sophisticated access control structure. For example, there may be public keys for transaction validators 701, in which case a token transaction may be validated and signed by validators 701 before being sent to the blockchain network 106. The token issuer 702 can also add a master certificate public key to create a hierarchical structure of certified public keys as the token system evolves. There may also be public keys dedicated to paying transaction fees, as discussed below.

In the example framework the tokens are pegged to the native blockchain token. For brevity, the example of bitcoin will be used herein but it should be appreciated that this not limiting on all embodiments. In that case, there is a fixed conversion rate between bitcoin and the tokens. Note that this is not an exchange rate. This is simply a convenient representation of the token value. For example, 1000 satoshis (sats) may represent 1 GBP. Given a token transaction that has 10,000 sats as its output, the token output therefore has a token value of 10 GBP. It is worth noting that because of the dust limit, which is at 546 satoshi at the time of writing, it may be more convenient to define the pegging ratio to be 1:dust limit, where 1 is the smallest non-divisible unit of the token.

Note that in this example the specification may include the reserve-issuance ratio. This is to suggest that the token issuer 702 cannot issue more tokens than its financial capability. The token issuer 702 may also need to have a valid licence from the central bank to be allowed to issue GBP tokens. The jurisdiction field can specify where the token system is regulated, and relevant laws can be applied. These compliances may be audited by a third party, and the auditing results may be put on chain for transparency. In general, all traditional approaches to a financial entity or a token issuer can be integrated into the example token framework. Any enforcement of rules, regulations, or laws can be a combination of on-chain and off-chain natures.

**Mint transaction**

To mint tokens, the token issuer 702 constructs a mint transaction. An example is given below:

| $TxID_{mint}$ | | | |
|---|---|---|---|
| Version | 1 | Locktime | 0 |

(continued)

| TxID_mint | | | |
|---|---|---|---|
| In-count | 1 | Out-count | 1 |
| Input list | | Output list | |
| Outpoint | Unlocking script | Value | Locking script |
| mint out-point | $< Sig_{mint} >$ $< PK_{mint} >$ | $1000x_1$ sa-toshi | OP_DUP OP_HASH160 $<H(PK_1)>$ OP_EQUALVERIFY OP_CHECKSIG |

This example transaction has one input that is prepared by the token issuer 702 and contains a signature that can be verified by the public key $PK_{mint}$. The mint transaction may include a different form of cryptographic data, e.g. a signed or encrypted message. According to the specification in $TxID_{setup}$, this transaction mints $x_1$ GBP tokens, and they are assigned to the owner of $PK_1$.

The transaction fee is *value of mint outpoint* - $1000x_1$, and here it is assumed that the mint outpoint was prepared by the token issuer 702 to have the exact amount to cover both the transaction fee and the value of the first output. More discussion on the transaction fee can be found below.

A blockchain transaction is defined to be a token mint transaction if

1. all inputs in the transaction contain a signature or signatures that can be verified by the minting public key or minting public keys, and
2. it is a valid blockchain transaction.

The implication of the definition is that the bitcoin are coloured with the minting public keys. The colour is then preserved through the entire transaction chain that starts with the mint transaction or multiple mint transactions. To check whether a blockchain transaction is a token transaction, one can trace back to a mint transaction via the transaction chain. This may be difficult to do when the system is at scale. However, token blocks and token UTXO snapshots may be used to optimise this process.

The token issuer 702 will be able to construct more than one such transaction to meet the demand of the tokens. In this case, the number of tokens can be minted is limited by the number of bitcoin the token issuer 702 has and the rules in the specification.

**Spend transaction**

Once the mint transaction is published on the blockchain 150, the token user 703 who owns the public key to which the token output of the mint transaction is locked, can spend the tokens.

Consider the following transaction, $TxID_{spend}$, which spends $TxID_{mint}$.

| TxID_spend | | | |
|---|---|---|---|
| Version | 1 | Locktime | 0 |
| In-count | 1 | Out-count | 1 |
| Input list | | Output list | |
| Outpoint | Unlocking script | Value | Locking script |
| $TxID_{mint}$ II 0 | $< Sig_1 >< PK_1 >$ | $1000x_2$ sa-toshi | OP_DUP OP_HASH160 $<H(PK_2)>$ OP_EQUALVERIFY OP_CHECKSIG |

This transaction has no explicit reference to the public key $PK_{mint}$. To identify this transaction as a token transaction, we need to trace back to the transaction that is referenced in the input, which is $TxID_{mint}$. By obtaining $TxID_{mint}$ either locally or from the blockchain network 106, we can verify that it is a valid token mint transaction, and therefore $TxID_{spent}$ is a token transaction. To validate the token transaction, three mains checks are required:

1. the outpoint referenced in the input is unspent;

2. the output value is not greater than the input value; and
3. the signature is valid (or script validation is successful).

Note that all these checks coincide with the normal blockchain transaction validation. Therefore, all checks can be delegated to blockchain nodes 104. To summarise, a validation on token transactions consists of only two steps:

1. check the input can be traced back to a token mint transaction, and
2. obtain a confirmation from blockchain nodes that the token is blockchain valid.

**Transaction Fees**

There are three ways in which the transaction fees may be handled.

The first is a token-only approach. In order to keep the simplicity in token transaction validation, and to ensure that token transactions consist of only token inputs and outputs, we can pay the transaction fee by burning a small fraction of the tokens. As shown in $TxID_{spend}$, the owner of $PK_1$ transfers $x_2$ GBP token to the owner of $PK_2$. The transaction fee $1000(x_1 - x_2)$ effectively burns $(x_1 - x_2)$ tokens. For token users, this can be considered as the fee for token transfers. For token issuers, this means that the number of tokens in the system diminishes over usage. This might be a desired feature for some type of tokens that naturally depreciate. On the other hand, if this is an issue for the token issuer 702, it can mint new tokens from time to time to compensate the transaction fees.

If zero-fee transactions are acceptable to blockchain nodes 104, then the issue of paying fees for token transactions will be eliminated. However, the token issuer 702 may have to pay blockchain nodes 104 off-chain in fiat via a business contract. In this case, the token issuer 702 effectively is paying transaction fees for the token users 703.

The second is a public-key approach. Another possibility is to use public keys to indicate the purpose of an input in a token transaction. In this case, the token issuer 702 can introduce a fee-payment public key or a set of them in the specification in the setup transaction. The fee-payment public keys can be owned by token issuers and distributed to token wallets.

The idea is to add one more input to every token spending transaction to cover the transaction fees in exact amount. An example is given below.

| $TxID'_{spend}$ | | | |
|---|---|---|---|
| Version | 1 | Locktime | 0 |
| In-count | 2 | Out-count | 1 |
| Input list | | Output list | |
| Outpoint | Unlocking script | Value | Locking script |
| $TxID_{mint} \parallel 0$ | $< Sig_1 >< PK_1 >$ | $1000x_1$ sa-toshi | OP_DUP OP_HASH160 $<H(PK_2)>$ OP_EQUALVERIFY OP_CHECKSIG |
| Fee outpoint | $< Sig_{fee} >< PK_{fee} >$ | | |

Note that the fee outpoint is not a token input in the sense that we cannot trace it back to a token mint transaction. However, as the public key in the unlocking script can be identified as a valid public key certified by the token issuer 702, the fee outpoint does not invalidate the token transaction. To make it more flexible, the token issuer may allow users to register their fee-payment public keys. A list of certified fee-payment public keys can be published in an updated version of the specification.

The advantage of this approach is that all outputs of token transactions are token outputs. This provides the simplicity during validations. As a token issuer 702, it is also possible to use the fee-payment input as an approval for the token transfer. A token user 703 constructs a partial transaction first. The token issuer 702 or the wallet software approves the transaction by adding a fee input to complete the transaction. This additional approval process will also prevent users from accidentally burning tokens.

There are two disadvantages of this approach with respect to the token-only approach.

1. A couple of additional checks must be introduced.

a. Check that the fee-payment public key is included in the specification.

b. Check that the value of the output is equal to (or not greater than) the value of the token input. This is to make sure that token users do not inflate the token output value by "borrowing" some bitcoins from the fee-payment input. In the token-only approach, the input consists of token inputs only, so the check is the same as whether the total output value is not greater than the total input value, and this can be delegated to blockchain nodes 104.

2. The fee outpoint must contain the exact amount for paying the transaction fee. No changes can be collected as we do not allow non-token outputs. This requires token users or token issuers to prepare the fee outpoints before they can transfer a token.

The overhead created by 1b is negligible in terms of computation, and the benefit it brings is quite significant in terms of preventing accidental burning of tokens. The second disadvantage can also be mitigated by having a fee outpoint pool or server owned by the token issuer 702 to provide appropriate fee outpoint for each token transaction request.

The third is a SIGHASH_SINGLE approach. The goal here is to address the lack of flexibility in paying transaction fees and disentangle token and non-token outputs at the same time. We observe that to pay the transaction fee and to collect some changes require only one input and one output from a token transaction. We can use SIGHASH_SINGLE to link this pair of input and output so that the output can be distinguished from other outputs.

SIGHASH_SINGLE is a flag attached to a signature to indicate that the message signed by the signature excludes all outputs except for the output that has the same index as the input that contains the signature. Note that other blockchains may use a different signature flag for the same purpose and SIGHASH_SINGLE is used only as an illustrative example. This implies that one can add or modify outputs to the transaction without invalidate the signature if the index of the signed output stays the same. As we have not included SIGHASH_NONE, no input can be added or modified.

To construct a spending transaction, the user submits a token input to their wallet software or an entity that funds the transaction fee (can be user themselves), e.g., $TxID_{mint} \| 0$. An incomplete transaction is then constructed as:

| $TxID''_{spend-i\i\ complete}$ | | | |
|---|---|---|---|
| Version | 1 | Locktime | 0 |
| In-count | 2 | Out-count | 1 |
| Input list | | Output list | |
| Outpoint | Unlocking script | Value | Locking script |
| Fee outpoint | $< Sig_{fee}\|SINGLE > < PK_{fee} >$ | z satoshi | OP_DUP OP_HASH160 $<H(PK_{fee})>$ OP_EQUALVERIFY OP_CHECKSIG |
| $TxID_{mint} \| 0$ | | | |

Note that the signature $Sig_{fee}$ signs all the inputs and the first output shown in $TxID''_{spend-incomplete}$.

Upon receiving or constructing the incomplete transaction, the user 703 completes it by adding any number of token outputs and signs the updated transaction.

| $TxID''_{spend}$ | | | |
|---|---|---|---|
| Version | 1 | Locktime | 0 |
| In-count | 2 | Out-count | 3 |
| Input list | | Output list | |
| Outpoint | Unlocking script | Value | Locking script |
| Fee outpoint | $< Sig_{fee}\|SINGLE > < PK_{fee} >$ | z satoshi | OP_DUP OP_HASH160 $<H(PK_{fee})>$ OP_EQUALVERIFY OP_CHECKSIG |
| $TxID_{mint} \| 0$ | $< Sig_1 >< PK_1 >$ | $1000x_2$ satoshi | OP_DUP OP_HASH160 $<H(PK_2)>$ OP_EQUALVERIFY OP_CHECKSIG |

(continued)

| Input list | | Output list | |
|---|---|---|---|
| Outpoint | Unlocking script | Value | Locking script |
| | | $1000x_3$ sa-toshi | OP_DUP OP_HASH160 <$H(PK_3)$> OP_EQUALVERIFY OP_CHECKSIG |

In this transaction, the signature $Sig_1$ signs all inputs and outputs. We have the following equations on values:

$$transaction\ fee = value\ of\ fee\ outpoint - z$$

$$x_1 = x_2 + x_3$$

There are a few methods to distinguish a fee-payment input from a token input.

1. Check whether the input is a token output. This would be quite difficult if there is no list of token outpoints for reference. If one starts to trace back from the fee outpoint, it might take long time to reach a negative conclusion.
2. Define the first input always to be the fee-payment input. This can be implemented as part of the wallet software.
3. Define the input with SIGHASH_SINGLE to be the fee-payment input. This implies that no other token input can use SIGHASH_SINGLE.

Assuming that we can distinguish a fee-payment input from a token input, to identify the non-token output is simply to check whether the index of the output is the same as the index of the fee-payment input.

However, if we assume that SIGHASH_SINGLE is used to flag the fee-payment input (method 3), then we can identify the non-token output directly without identifying the fee-payment input. For each output, we can count the number of signatures that have signed that output. The non-token output has the greatest number of signatures because it always has at least one extra from the fee-payment input.

This feature of the token outputs induces another type of directed acyclic graph at outpoint level.

Outpoint-Signature Directed Acyclic Graph (O-S DAG)

An outpoint-signature directed acyclic graph is a DAG where

1. nodes are blockchain transaction outpoints, and
2. a directed edge is established from one node to another if the second node is part of the message that is signed by a signature that is required to assign (spend) the first node.

Roughly speaking, we have the outpoints as nodes and the signatures as edges. All edges in an O-S DAG are established within the blockchain transactions. Figure 5 illustrates an example of an O-S DAG with $TxID''_{spend}$ as an example.

The advantage of this SIGHASH_SINGLE approach is to provide the flexibility in paying the transaction fee.

**Security on non-token inputs**

We have introduced non-token inputs to token transactions to pay transaction fees. These non-token inputs may be used either accidentally or maliciously to inflate the value of the token outputs. A check needs to be implemented to make sure that those token transactions are deemed to be invalid.

Assuming that the total input value in satoshi of a token transaction is $VI_{token} + VI_{non-token}$, the total output value is $VO_{token} + VO_{non-token}$, and the transaction fee is $V_{fee}$, then we have

$$VO_{token} + VO_{non-token} + V_{fee} = VI_{token} + VI_{non-token} \cdot$$

We expect that $VO_{token} = VI_{token}$. However, a token user can take some satoshis from either $VO_{non-token}$ or $V_{fee}$. That is,

22

$$VO'_{token} + VO'_{non-token} + V'_{fee} = VO_{token} + VO_{non-token} + V_{fee}$$

where

$$VO'_{token} > VO_{token} \text{ and } VO'_{non-token} + V'_{fee} < VO_{non-token} + V_{fee}.$$

As a blockchain transaction, it is still valid. As a token transaction, this is considered invalid. An example of a pair of token transactions are given below.

| $TxID_{token\text{-}valid}$ | | | |
|---|---|---|---|
| Version | 1 | Locktime | 0 |
| In-count | 2 | Out-count | 2 |
| Input list | | Output list | |
| Outpoint | Unlocking script | Value | Locking script |
| Fee outpoint (5000 satoshi) | $< Sig_{fee}\|SINGLE > < PK_{fee} >$ | 3000 satoshi | OP_DUP OP_HASH160 $<H(PK_{fee})>$ OP_EQUALVERIFY OP_CHECKSIG |
| Token outpoint (1000 satoshi) | $< Sig_1 >< PK_1 >$ | 1000 sa-toshi | OP_DUP OP_HASH160 $<H(PK_2)>$ OP_EQUAL-VERIFY OP_CHECKSIG |

| $TxID_{token\text{-}invalid}$ | | | |
|---|---|---|---|
| Version | 1 | Locktime | 0 |
| In-count | 2 | Out-count | 3 |
| Input list | | Output list | |
| Outpoint | Unlocking script | Value | Locking script |
| Fee outpoint (5000 satoshi) | $< Sig_{fee}\|SINGLE > < PK_{fee} >$ | 3000 satoshi | OP_DUP OP_HASH160 $<H(PK_{fee})>$ OP_EQUALVERIFY OP_CHECKSIG |
| Token outpoint (1000 satoshi) | $< Sig_1 >< PK_1 >$ | 2000 sa-toshi | OP_DUP OP_HASH160 $<H(PK_2)>$ OP_EQUAL-VERIFY OP_CHECKSIG |

The first transaction is token-valid in the sense that the token output has the same value as the token input, and the difference between the fee input and fee output indicates a transaction fee of 2000 satoshi. The second transaction is token-invalid in the sense that the token output is greater than the token input. However, the difference between the total value of the inputs and the total value of the outputs indicates a transaction fee of 1000 satoshi. This transaction is blockchain-valid and would be accepted by the blockchain nodes. Therefore, if this transaction was published, then the token value that is represented by 1000 satoshi would be lost.

In token-only approach and public-key approach, the fee-payment input must be added after the token input and output are finalised. Therefore, the fee-payment entity (token issuer or wallet software) can enforce a check before signing the token transaction.

It is worth noting that there is no incentive for users to deliberately inflate token outputs in this way, as it will burn their tokens. On the other hand, any accidental mistakes will be recorded immutably on the blockchain. Token users may show the token issuer that the accident was genuine, and the issuer may choose to mint new tokens to reimburse the user. However, it is still important to avoid any accidental mistakes.

**Token Transaction Validity**

We have covered how tokens can be minted and spent. We can now give a comprehensive definition on the validity of a token transaction.

*Definition - Token Outpoint*

An outpoint TxID‖Index is a token outpoint if

1. the transaction TxID is a token mint transaction, or
2. there is a transaction path from a token mint transaction to the transaction TxID and
3. the index does not correspond to the index of a fee-payment input or a non-token input.

*Definition - Token Transaction Validity*

A token transaction is valid if it is a valid token mint transaction or

1. it is blockchain valid,
2. at least one of its inputs references a token outpoint, and
3. the total value of its token outputs is less than or equal to the total value of its token inputs.

Given the definitions above, for each blockchain transaction, one needs to trace it back to a mint transaction or a coinbase transaction. If they end up with a mint transaction, then the transaction is a token transaction. If they end up with a coinbase transaction without identifying a mint transaction, then the transaction is not a token transaction. It may be difficult to identify a token transaction and validate it when the blockchain system scales. One way to improve this is to keep a record of known valid token transactions. Instead of tracing all the way back to a mint transaction, a validator can stop at a known valid token transaction. Moreover, if the validator has access to a trusted set of unspent token outpoints, then the tracing can be replaced by a look-up operation that checks the membership of the set.

To address the scalability of our token systems, we propose a few options to optimise token transaction validations. We start with a description of a token server 601 that keeps a record of all the token transactions. We then propose a block structure on the record which leads us to a description of a light client for the token system. To improve the efficiency further, we finally propose a token client that makes use of token UTXO snapshots.

*Definition - Token Server*

A token server 601 must satisfy the following requirements:

1. being able to validate token transactions; and
2. having a connection to the blockchain network.

The first requirement implies that a token server 601 must store some information about the token system to recognise that the inputs of a blockchain transaction are token inputs. There are many ways to achieve this.

The most straightforward is to store the token setup transaction with the token specifications and all subsequent token transactions. The token server 601 first checks whether the transaction is a token mint transaction by checking the public keys and the corresponding signatures in the input. If not, the token server 601 checks whether the inputs of a blockchain transaction are from some historical token transactions. If the check passes, then the token server 601 can start to validate the token transaction as defined below.

Note that the double spending check will be provided by the blockchain nodes and is optional for a token client. If a token server 601 delegates some checks on the validity of the transaction to blockchain nodes, they need to wait for a confirmation of the validity from the network. Therefore, we have the second requirement in the definition.

It is also possible to replace signature verification with format checking, which can be more efficient to implement. The idea is to ensure that when a public key is given in the input, a corresponding signature is also present, and delegate the signature verification to blockchain nodes. This can be achieved if the locking script is a standard P2PKH and the unlocking script in the input contains only one public key and one signature. We may allow other common scripts, and we can fall back to signature validation if the script is in question.

**Token Blocks**

Regarding the structure of the stored data on a token server 601, we can mimic the blockchain system and introduce the concept of token blocks. This will enable us to introduce the concept of a token light client 602a in the next section. An example of a definition for a token block is given below.

*Definition - Token Block*

A token block comprises a block header and a list of valid token transaction. The block header may contain some or all of the following fields, where

1. *version* indicates which token system this block belongs to,
2. *previous block header hash* is the double SHA256 value of previous token block header, empty for the genesis token block,
3. *Merkle root* is calculated on the token transactions in that token block,
4. *Bitcoin block height* indicates which Bitcoin block all the token transactions are from, and
5. *transaction count* indicates the total number of token transactions that are included in the token block.

A list of digital signatures can be added to each token block to indicate that each signer has verified the validity of the block, where a token block is valid if

1. all transactions are token valid,
2. all transactions are coming from the blockchain block that is specified by the blockchain block height,
3. it contains the hash value of the previous token block header,
4. the Merkle root of token transactions are correctly calculated, and
5. the transaction count is correct.

A token block is constructed a token server 601 as soon as a new blockchain block is published. For example, given a newly published blockchain block:

| Block Version | 0x00000001 |
|---|---|
| Prev_Block | 000000000000000000123456789912345678fe123456786cc1234123488d3f0c7 |
| Merkle_Root | 12345678912345678141592653591 43c203141592653598a63814159265359 |
| Timestamp | 2021-02-04 10:50:50 utc |
| Difficulty_Bits | 18027387 |
| Nonce | 3141592653 |
| Tx_Count | 718281 |
| Txs | $TxID_1$, $TxID_2$, ..., $TxID_{718281}$ |

The token server 601 constructs the token block as the following:

| Version | Alice's GBP Token |
|---|---|
| Prev_Block | Double SHA256 of pervious token block header |
| Merkle_Root | $MR_{token}$ |
| Bitcoin_Block_Height | 672038 |
| Tx_Count | 4 |
| Txs | $TxID_1$, $TxID_2$, $TxID_3$, $TxID_4$ |
| Signatures | *< sig >< PK >* |

1. We use the version field to indicate which token system the block belongs to.
2. The previous block hash will be the hash value of the previous block header. Note that There is no proof of work required here.
3. The Merkle root is calculated from the transactions that are included in the token block. An alternative is to use the Bitcoin Merkle root.
4. We use a new field called Bitcoin block height to indicate to which Bitcoin block all the token transactions belong.
5. The transaction count indicates how many transactions there are in the token block.
6. The full list of transactions is listed in the transactions field.

7. The signature field allows entities to add digital signatures that sign the block header. It can be a signature from the token issuer or a delegator. A signature should only be added after the token block is verified successfully.

Note that the token block header comprises the first 5 fields in the token block.

For each blockchain block, there can only be a maximum of one token block, and it is not possible for a token block to include a set of transactions that are coming from two different blockchain blocks.

There is no proof of work required for the token system. However, as all information about the token system can be derived from the blockchain ledger, the security of the token system is inherited from the blockchain system. The signatures added to the block provides a shortcut for token block validations. However, if users do not trust the signers, they can still validate the block independently. All information required to validate the token block is public available on the blockchain ledger. On the other hand, given the token block can be verified publicly, the signers are incentivised not to sign invalid token blocks.

A common concern would be orphan blocks, which occurs rarely from time to time. The token system is indeed subject to reorgs as the blockchain system. When a valid block or blocks is orphaned due to the presence of another longer chain that has more proof of work, all transactions that are in the block or blocks and not in the other longer chain will return to their unpublished status. The same applies to the token status. However, as in many cases, honest users and honest blockchain nodes will not be affected by reorgs as transactions on competing chains would be identical. For the token issuer, they need to make sure that the token server 601 who maintains their token system are connected to the majority of the network in order to have an accurate up-to-date view on their token system.

To optimise token validation, we can try to minimise the storage for token transactions and improve the efficiency in look ups. As a counterpart to Bitcoin light client, we introduce token light client 602a.

### Token Light Client

A token light client 602a is a token client that keeps

1. the token setup transaction,
2. the token block headers,
3. the token transactions in transaction IDs, and
4. the token value and the index of each output for each stored transaction ID.

The last two items can be concatenated into a string of the form *TxID‖index‖value.* The token light client 602a is capable of token transaction validation and token block construction.

When a token transaction is sent to the token light client 602a, it performs the following steps:

1. Check whether the token transaction is a mint transaction by comparing the public keys in its inputs with the public keys on the token specification.
2. If not, for each input, check whether the referenced outpoint matches a token outpoint stored locally.
3. If there is a match, identify all token outputs and check the total value of the token inputs is equal to (or greater than) the total value of the token outputs.

If the check passes, the token light client 602a saves the transaction as *TxID‖index‖value‖flag* for each of its token outputs. The flag indicates whether the corresponding transaction output (*TxID‖index*) is spent or unspent. Then the token transaction is sent to the blockchain network for further checks.

When the token light client 602a gets a confirmation from a blockchain node that the transaction is valid or accepted, the token light client 602a can include the transaction in the next token block. When a new blockchain block is published, the token light client 602a can construct the corresponding token block. Note that there is no need to have the full transaction data to construct the token block. It is enough to just have transaction IDs. Moreover, there is no proof of work required to construct the block. It might be sensible to double check everything is correctly computed and recorded. The token block can be finalised by having a signature from the token issuer.

### Token UTXO Client

We can improve the token system more by observing that spent token transactions or token outpoints may not have to be stored. In this section, we keep the token server 601 as described above and introduce the idea of a token UTXO client 602b. The token UTXO client 602b is responsible for tracking all unspent token outpoints, which will improve the efficiency in token transaction identification and validation. If there is anything goes wrong, the token system can always fall back to the token server 601.

*Definition - Token UTXO Snapshot*

A token UTXO snapshot comprises a snapshot header and a set of outpoints. A snapshot header contains 5 fields, where

1. *version* indicates which token chain this snapshot belongs to,
2. *previous snapshot header hash* is the double SHA256 value of previous token snapshot header,
3. *Merkle root* is calculated on all the outpoints in the token UTXO set,
4. *Bitcoin block height* indicates up to which Bitcoin block the token UTXO set is derived,
5. outpoints count indicates the total number of outpoints that are in the token UTXO set.

A token server 601 and/or the token UTXO client 602b can construct and keep a list of the token UTXO snapshots. An example is given below:

| Version | Alice's GBP Token |
|---|---|
| Prev_Block | Double SHA256 of pervious token snapshot header |
| Merkle_Root | $MR_{token\text{-}UTXO}$ |
| Bitcoin_Block_Height | 672038 |
| UTXO_Count | 4 |
| UTXO_set | $TxID_1\|0, TxID_1\|1, TxID_2\|0, TxID_3\|1$ |
| Signatures | *< sig >< PK >* |

The advantage of this solution is that as a token client, it can choose to store only the latest token UTXO snapshot as it contains all the information the token client needs to verify token transactions and construct the next token UTXO snapshot. When receiving a blockchain transaction, the token client only needs to look up the outpoints in the input and check whether they are in the latest token UTXO set. If they are, then they are valid token inputs. Note that, the token client does not check the double-spending condition. This check is done by the blockchain nodes. This is one of the main advantages of a UTXO-based token system.

The downside is that if the latest token UTXO snapshot is corrupted, the token UTXO client 602b must retrieve the last token UTXO snapshot that is available and subsequent blockchain blocks or token blocks then derive the latest snapshot block by block. In this case, the token sever will a trusted source for the required information.

To mitigate the potential risk of losing the latest UTXO snapshot further, token issuers can choose to have more than one token servers and a few token UTXO clients to maintain their token systems. If one token UTXO client 602b fails, other UTXO clients can provide the information for speedy recovery while keeping the token system running uninterrupted.

Figure 6 shows an example of token network. To summarise, the token network may comprise some or all of:

• a token server 601 that stores all token related transactions and structure them in blocks,
• one or more token light clients 602a that stores all token outpoints and their corresponding values, and
• one or more token UTXO clients 602b that stores all unspent token outpoints and their corresponding values.

All of them are capable of validating token transactions and creating check points (e.g. token blocks or token UTXO snapshots) to improve efficiency.

**Bitcoin-valid and token-invalid**

As many other token systems, a commensal token system induces transactions that could be blockchain valid and token invalid, which would cause loss of tokens. This issue may be mitigated by introducing a verification step before adding a transaction fee to finalise the token transaction. This verification step can be done by a token wallet, a token client, or a token server.

**Tokens and non-tokens**

One major challenge in designing a token system is to avoid mixing tokens with non-tokens or other tokens. The challenge becomes more difficult when we must include transaction fees in token transactions. We have proposed a public-key approach and a sighash-single approach to tackle this. In both cases, a mechanism is introduced to make sure that the bitcoins that represents tokens are not mixed with the bitcoins that covers the transaction fees.

Because we have pegged the token value to the bitcoin value and introduced these mechanisms to prevent mixing of tokens and non-tokens, it implies that the total amount of bitcoins in the token system are there at issuance of the tokens. These tokens or coloured bitcoins can be transferred, divided, or even burnt, but are never mixed with non-coloured bitcoins.

This leads to another use case, "Green Bitcoin". To promote environment friendly mining, we can use certified public keys or Miner IDs to colour bitcoins that are mined using renewable energies and call them green bitcoins. By adopting the public-key approach or the sighash-single approach, green bitcoins will never be mixed with non-green bitcoins. As users will tend to obtain green bitcoins, more Bitcoin nodes will be incentivised to switch renewable energies and minting green coins.

## Fungibility

Due to the nature of pegging, a commensal token system is mainly used for fungible tokens. However, if we just abstract the idea of using public keys to colour bitcoins, then non-fungible tokens can be created. For the time being, we consider non-fungible tokens being out of scope of this white paper.

## Scalability

By design, a commensal token system relies on the blockchain system and re-uses as much work as possible from the blockchain system. A commensal token system does not need to check double spending. Hence there is no memory required to hold unpublished token transactions (mempool) or the token UTXO set temporarily. As the blockchain system scales, the commensal token system scales accordingly.

CONCLUSION

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In non-preferred embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

It will be appreciated that the above embodiments have been described by way of example only. More generally there may be provided a method, apparatus or program in accordance with any one or more of the following Statements.

Statement 1. A computer-implemented method of validating token transactions, wherein a token transaction is a blockchain transaction that comprises one or more token outputs, each token output locking a respective amount of tokens, wherein a validating entity has access to a token mint transaction and/or a token setup transaction, wherein the token mint transaction comprises cryptographic minting data, and mints an initial amount of the tokens, wherein the token setup transaction comprises the minting data certified by the token issuer, and wherein the method is performed by the validating entity and comprises: obtaining a target token transaction comprising one or more token inputs and one or more token outputs; and validating the target token transaction, wherein said validating of the target token transaction comprises: verifying that each token input of the target token transaction comprises the minting data, and/or verifying that each token input of the target token transaction references a respective token output of either the token mint transaction or a previously validated token transaction that can be traced back to the token mint transaction.

In other words, the target token transaction is a valid mint transaction if it contains, in an input, the minting public key (and a signature corresponding to the minting public key).

Cryptographic data is data used as part of a cryptographic scheme, i.e. in a cryptographic setting.

Statement 2. The method of statement 1, comprising, on condition that the target token transaction is a valid token transaction, transmitting the target token transaction to the blockchain network.

Statement 3. The method of statement 2, comprising obtaining confirmation from the blockchain network that the target token transaction is a valid blockchain transaction.

Upon obtaining said confirmation, the validating entity may store the target token transaction in a list of valid token transactions.

Statement 4. The method of statement 3, wherein obtaining of the confirmation comprises verifying that the target token transaction has been recorded on the blockchain.

Statement 5. The method of any preceding statement, wherein the minting data is one of:

- a minting public key associated with the token issuer,
- a knowledge proof produced by the token issuer,
- a symmetrically signed message signed by the token issuer, and
- a message encrypted by the token issuer.

Statement 6. The method of any preceding statement, comprising:

receiving a request from a first requesting entity for confirmation that the target token transaction is a valid token transaction; and
on condition that the target token transaction is a valid token transaction, transmitting a confirmation to the first requesting entity that the target token transaction is a valid token transaction.

Statement 7. The method of statement 2 or any statement dependent thereon, comprising:
on condition that the target token transaction is a valid token transaction and before transmitting the target token transaction to the blockchain network, signing the target token transaction with a signature linked to a validating public key associated with the validating entity.

Statement 8. The method of any preceding statement, wherein the target token transaction comprises one or more non-token inputs that reference respective outputs of previous blockchain transactions, and wherein the method comprising identifying the one or more non-token inputs as inputs that comprise one or more of a predetermined set of public keys.

E.g. fee payment public keys.

Statement 9. The method of statement 8, wherein validating the target token transaction comprises verifying that a total amount of tokens locked by the one or more token outputs of the target token transaction is not greater than an amount locked by the one or more respective token outputs referenced by the one or more token inputs of the target token transaction.

10. The method of any preceding statement, wherein the target token transaction comprises one or more non-token inputs and one or more non-token outputs, and wherein validating the target token transaction comprises verifying that a total amount of tokens locked by the one or more token outputs of the target token transaction is not greater than an amount locked by the token outputs referenced by the one or more token inputs.

Statement 11. The method of any of statements 8 to 10, comprising identifying the non-token inputs as those inputs that are signed with a signature having a predetermined signature flag.

E.g. A sighash_single signature flag.

Statement 12. The method of statement 11, comprising identifying the non-token outputs as those outputs that are signed with a higher number of signatures.

Statement 13. The method of any preceding statement, wherein validating the target token transaction comprises verifying that the token output of the previously validated token transaction is an unspent transaction output.

Statement 14. The method of any of statements 1 to 12, wherein validating the target token transaction does not comprise verifying that the token output of the previously validated token transaction is an unspent transaction output.

In other words, verifying that the token output of the previously validated token transaction is an unspent transaction output is delegated to the blockchain network.

Statement 15. The method of any preceding statement, comprising:
validating the token mint transaction, wherein validating the token mint transaction comprises verifying that the token mint transaction comprises a minting public key associated with the token issuer.

Statement 16. The method of any preceding statement, wherein the validating entity stores a record of previously validated token transactions, and wherein verifying that a respective token input of the target token transaction references a respective token output of a previously validated token transaction comprises determining whether the referenced token output is present in the record of previously validated token transactions.

Statement 17. The method of any preceding statement, comprising:
constructing a current token block, wherein the current token block comprises a token block header and a set of valid token transactions, and/or identifiers thereof, including the target token transaction, and wherein the token block header comprises a Merkle root calculated based on the set of valid token transactions in the token block.

Statement 18. The method of statement 17, wherein the validating entity maintains a sequence of previously constructed token blocks, and wherein the block header of the current token block comprises a hash of a respective block header of a token block immediately preceding the current token block in the sequence.

Each token block other than the first to be constructed comprises a previous block header hash, i.e. a hash of the block header of the token block preceding that token block in the sequence.

The record of previously validated token transaction may be a record of token blocks.

Statement 19. The method of statement 17 or statement 18, comprising constructing a respective token block for each newly published block of the blockchain.

The token block header of a respective token block comprises a respective block height of the respective blockchain block.

Statement 20. The method of any of statements 17 to 19, wherein the block header of the current token block comprises a respective signature generated by some or all of the token issuer, the validating entity, an auditing entity, and/or a government entity.

Statement 21. The method of any of statements 17 to 20, comprising transmitting one or more token blocks and/or respective block headers thereof to a second requesting entity.

Statement 22. The method of statement 6 and statement 21, wherein said transmitting of the confirmation to the first requesting entity comprises transmitting a Merkle path linking the target token transaction to the Merkle root stored in the block header of the current token block.

The current token block may or may not be the latest token block.

Statement 23. The method of any preceding statement, wherein the validating entity comprises a token server.

Statement 24. The method of statement 23, wherein the first and/or second requesting entities comprise token client applications, and/or wherein obtaining the target token transaction comprises receiving the target token transaction from a token client application.

Statement 25. The method of any of statements 1 to 13, wherein the validating entity stores:

> a set of token block headers of respective token blocks, wherein each token block header comprises a respective Merkle root calculated based on a respective set of valid transactions stored in the respective token block; and
> a set of token transaction identifiers; and
> a set of token outputs, wherein each token output comprises a respective output index of one of the set of token transaction identifiers, a respective token amount.

Statement 26. The method of statement 25, wherein verifying that each token input of the target token transaction references a respective token output of a previously validated token transaction comprises determining whether the referenced token output is present in the set of token outputs.

Statement 27. The method of statement 26, comprising:
on condition that the target token transaction is a valid token transaction, storing the transaction identifier of the target transaction and the one or more token outputs of the target transaction in the set of token transaction identifiers and the set of token outputs respectively.

Statement 28. The method of statement 27, comprising:
constructing a current token block, wherein the current token block comprises a token block header and a set of transaction identifiers of valid token transactions, including the target token transaction, and wherein the token block header comprises a Merkle root calculated based on the set of transaction identifiers.

Statement 29. The method of statement 28, comprising constructing a respective token block for each newly published block of the blockchain.

Statement 30. The method of any of statements 25 to 29, wherein the validating entity comprises a token client application.

Statement 31. The method of statement 30, wherein obtaining the target token transaction comprises receiving the target token transaction as an input from a user.

Statement 32. The method of statement 30 or statement 31, comprising, on condition that the target token transaction is a valid token transaction, transmitting the target token transaction to a token server.

Statement 33. The method of any of statements 30 to 32, comprising receiving one or more token blocks and/or respective block headers thereof from the token server.

E.g. in response to temporarily losing a connection to the blockchain network.

Statement 34. The method of any of statements 30 to 33, comprising transmitting one or more token blocks to the token server for verification.

Statement 35. The method of any preceding statement, wherein the cryptographic minting data comprises public information known to be associated with the minting of tokens

Statement 36. A computer-implemented method of validating token transactions, wherein a token transaction is a blockchain transaction that comprises one or more token outputs, each token output locking a respective amount of tokens, and wherein the method is performed by a validating entity and comprises:

obtaining a target token transaction comprising one or more token inputs and one or more token outputs; and validating the target token transaction, wherein validating the target token transaction comprises verifying that each token input of the target token transaction references a respective token output stored in a current token snapshot, wherein the current token snapshot comprises a set of token unspent transaction outputs (UTXOs), wherein each token UTXO is a token output of a respective token transaction that has not been spent.

Statement 37. The method of statement 36, comprising constructing the current token snapshot.

Statement 38. The method of statement 37, wherein constructing the current token snapshot comprises tracking token UTXOs on the blockchain.

Statement 39. The method of statement 36, comprising receiving the current token snapshot from a token server.

Statement 40. The method of any of statements 36 to 39, comprising, on condition that the target transaction is a valid token transaction, constructing an updated token snapshot, wherein the updated token snapshot contains the one or more token outputs of the target transaction but not the one or more token outputs referenced by the one or more token inputs of the target token transaction.

Statement 41. The method of any of statements 36 to 40, comprising, on condition that the target transaction is a valid token transaction, transmitting the target token transaction to the token server and/or the blockchain network.

Statement 42. The method of any of statements 36 to 41, comprising:

receiving a request from a first requesting entity for confirmation that the target token transaction is a valid token transaction; and
on condition that the target token transaction is a valid token transaction, transmitting a confirmation to the first requesting entity that the target token transaction is a valid token transaction.

Statement 43. The method of statement 42, wherein the current snapshot comprises a Merkle root calculated based on the respective set of token UTXOs, and wherein said transmitting of the confirmation to the first requesting comprises transmitting a Merkle path linking the referenced token output to the Merkle root stored in the block header of the current snapshot.

Statement 44. Computer equipment comprising:

memory comprising one or more memory units; and
processing apparatus comprising one or more processing units, wherein the memory stores code arranged to run on the processing apparatus, the code being configured so as when on the processing apparatus to perform the method of any of statements 1 to 35.

Statement 45. A computer program embodied on computer-readable storage and configured so as, when run on one or more processors, to perform the method of any of statements 1 to 35.

Statement 46. Computer equipment comprising:

memory comprising one or more memory units; and
processing apparatus comprising one or more processing units, wherein the memory stores code arranged to run on the processing apparatus, the code being configured so as when on the processing apparatus to perform the method of any of statements 36 to 43.

Statement 47. A computer program embodied on computer-readable storage and configured so as, when run on one or more processors, to perform the method of any of statements 36 to 43.

According to another aspect disclosed herein, there may be provided a method comprising the actions of some or all of the token server, the token UTXO client, and the token light client.

According to another aspect disclosed herein, there may be provided a system comprising the computer equipment of the token server, the token UTXO client, and the token light client.

**Claims**

1.   A computer-implemented method of validating token transactions, wherein a token transaction is a blockchain transaction that comprises one or more token outputs, each token output locking a respective amount of tokens, and wherein the method is performed by a validating entity and comprises:

   obtaining a target token transaction comprising one or more token inputs and one or more token outputs; and validating the target token transaction, wherein validating the target token transaction comprises verifying that each token input of the target token transaction references a respective token output stored in a current token snapshot, wherein the current token snapshot comprises a set of token unspent transaction outputs (UTXOs), wherein each token UTXO is a token output of a respective token transaction that has not been spent.

2.   The method of claim 1, comprising constructing the current token snapshot.

3.   The method of claim 2, wherein constructing the current token snapshot comprises tracking token UTXOs on the blockchain.

4.   The method of claim 1, comprising receiving the current token snapshot from a token server.

5.   The method of any of claims 1 to 4, comprising, on condition that the target transaction is a valid token transaction, constructing an updated token snapshot, wherein the updated token snapshot contains the one or more token outputs of the target transaction but not the one or more token outputs referenced by the one or more token inputs of the target token transaction.

6.   The method of any of claims 1 to 5, comprising, on condition that the target transaction is a valid token transaction, transmitting the target token transaction to the token server and/or the blockchain network.

7.   The method of any of claims 1 to 6, comprising:

   receiving a request from a first requesting entity for confirmation that the target token transaction is a valid token transaction; and
   on condition that the target token transaction is a valid token transaction, transmitting a confirmation to the first requesting entity that the target token transaction is a valid token transaction.

8.   The method of claim 7, wherein the current token snapshot comprises a snapshot header, wherein the snapshot header comprises: a version, a hash of a previous token snapshot header, a Merkle root, a Bitcoin block height, and an outpoints count.

9.   The method of claim 8, wherein the current snapshot comprises a Merkle root calculated based on the respective set of token UTXOs, and wherein said transmitting of the confirmation to the first requesting comprises transmitting a Merkle path linking the referenced token output to the Merkle root stored in the block header of the current snapshot.

10.   Computer equipment comprising:

   memory comprising one or more memory units; and
   processing apparatus comprising one or more processing units, wherein the memory stores code arranged to run on the processing apparatus, the code being configured so as when on the processing apparatus to perform the method of any of claims 1 to 9.

11.   A computer program embodied on computer-readable storage and configured so as, when run on one or more processors, to perform the method of any of claims 1 to 10.

# Figure 1

# Figure 2

152i                                                    152j

202        $Tx_0$    201                              $Tx_1$    201    203

| $TxID_0$ | | | $TxID_1$ | |
|---|---|---|---|---|
| Input(s) | Output(s) | | Input(s) | Output(s) |
| Input | $UTXO_0$ | | Input | $UTXO_1$ |
| • Pointer to previous $Tx$ <br> • Index of UTXO in previous $Tx$ <br> • Unlocking script for unlocking from previous party | • Amount <br> • Locking script locking to Alice | | • Pointer to $Tx_0$ <br> • Index of $UTXO_0$ [within $Tx_0$] <br> • Unlocking script for unlocking $UTXO_0$ from Alice | • Amount <br> • Locking script locking to Bob |
| ⋮ <br> Optional further inputs <br> ⋮ | ⋮ <br> Optional further $UTXO$s <br> ⋮ | | ⋮ <br> Optional further inputs <br> ⋮ | ⋮ <br> Optional further $UTXO$s <br> ⋮ |

203

202

Transaction
from Alice to Bob

Validated by running: Locking
script from output 203 of $Tx_0$,
together with Alice's unlocking
script from input 202 of $Tx_1$. This
checks that Alice's unlocking script
in $Tx_1$ meets the condition(s)
defined in the locking script of
previous transaction $Tx_0$.

# Figure 3A

Client application — 105

UI layer — 402

Transaction engine — 401

403

# Figure 3B

**Client app (Alice)** — 500

503

502

501

# Figure 4A

# Figure 4B

# Figure 5

- ● Fee outpoint
- ◍ Spent token outpoint
- ○ Unspent token outpoint

$TxID''_{spend}$

# Figure 6

- ▲ Bitcoin Network — 106
- ⬒ Token Server — 601
- ◆ Token UTXO/Light Client — 602
- ● Token Users — 703

# Figure 7

703a

703a

Token User A

703b

Token User B

Request
&Response

$Tx_{spend}$

701

Validating Entity

$Tx'_{spend}$

Token Issuer

$Tx_{setup}$

$Tx_{mint}$

Blockchain Network

702

106